# EUROPÄISCHE PATENTSCHRIFT

(11) **EP 4 127 691 B1**
(45) Veröffentlichungstag und Bekanntmachung des Hinweises auf die Patenterteilung: **25.02.2026**
(21) Anmeldenummer: 21709981.1
(22) Anmeldetag: 04.03.2021
(51) Int. Cl.: F02D 41/22, G01N 27/406, F02D 41/14

(54) **VERFAHREN ZUM ERMITTELN EINES KORRIGIERTEN STICKOXIDWERTS EINES ABGASSENSORS**
METHOD FOR DETERMINING A CORRECTED NITROGEN OXIDE LEVEL OF AN EXHAUST AIR SENSOR
PROCÉDÉ DE DÉTERMINATION DE LA VALEUR CORRIGÉE D'UN NIVEAU D'OXYDES D'AZOTE D'UN CAPTEUR DE GAZ D'ÉCHAPPEMENT

(30) Priorität: 01.04.2020 DE 102020204213
(43) Veröffentlichungstag der Anmeldung: 08.02.2023
(73) Patentinhaber: Schaeffler Technologies AG & Co. KG, 91074 Herzogenaurach (DE)
(72) Erfinder: WIELAND, David, 81737 München (DE); SCHIFFERL, Ludwig, 81737 München (DE)
(74) Vertreter: Schaeffler Technologies
(86) Internationale Anmeldenummer: PCT/EP2021/055463
(87) Internationale Veröffentlichungsnummer: WO 2021/197752

(56) Entgegenhaltungen:
- CN-A- 102 798 654
- CN-A- 105 892 529
- CN-A- 110 735 699
- US-A- 4 471 648

## Beschreibung

Die vorliegende Erfindung betrifft ein Verfahren zum Ermitteln eines korrigierten Stickoxidwerts eines Abgassensors, beispielsweise eines Stickoxidsensors.

Abgassensoren, wie beispielsweise Stickoxidsensoren, Lambdasonden und Sauerstoffsensoren, können dem amperometrischen Prinzip beruhen, d. h. auf einer elektrochemischen Methode zur quantitativen Bestimmung von chemischen Stoffen. Insbesondere wird an einer Elektrode des Abgassensors ein elektrischer Strom derart eingestellt, dass sich ein zeitlich konstantes elektrochemisches Potential einstellt. Beispielsweise erlauben Stickoxidsensoren eine Messung der Stickoxidkonzentration im Abgas von Brennkraftmaschinen, beispielsweise Ottooder Dieselmotoren. Dadurch wird z. B. eine optimale Regelung und Diagnose von Stickoxidkatalysatoren durch die Motorsteuerung ermöglicht.

Derartige Abgassensoren weisen einen aus einem Feststoffelektrolyten gebildeten Hauptkörper auf, in dem Kavitäten mit zugeordneten Elektroden vorgesehen sind. Zudem ist im Hauptkörper eine Heizvorrichtung angeordnet, die dazu ausgebildet ist, den Hauptkörper auf eine vorbestimmte Betriebstemperatur zu heizen und auf dieser zu halten, beispielsweise bei ca. 850°C. Aufgrund zusätzlicher externer Wärmezufuhr, wie beispielsweise durch das den Abgassensor umströmenden Abgas, können die Elektroden wärmer als im Ausgangszustand sein, was zu einem erhöhten Signal des Abgassensors, beispielsweise einem zu hohen Stickoxidwert, führen kann.

Weitere Abgassensoren sind bekannt aus CN 102 798 654 B, US 2019/0078491 A1, US 7 462 266 B2, US 2005/0029250 A1 und US 6 939 037 B2. Zudem bilden die CN 105 892 529 B und CN 110 735 699 A Stand der Technik
Der vorliegenden Erfindung liegt die Aufgabe zu Grunde, ein Verfahren zum Ermitteln eines korrigierten Stickoxidwerts eines Abgassensors anzugeben, mittels dem die Genauigkeit des Abgassensors zumindest teilweise erhöht werden kann.

Diese Aufgabe wird mit einem Verfahren gemäß unabhängigen Anspruch 1 gelöst. Vorteilhafte Ausführungen sind in den Unteransprüchen angegeben.

Der vorliegenden Erfindung liegt im Wesentlichen der Gedanke zugrunde, den Spanungsabfall zwischen einer elektrischen Zuleitung einer Heizvorrichtung des Abgassensors und einer mit dieser elektrischen Zuleitung verbundenen Messleitung zu ermitteln und diesen ermittelten Spannungsabfall zum Ermitteln einer Kompensationsspannung mit einer vorbestimmten Referenzspannung zu vergleichen. Die dadurch ermittelte Kompensationsspannung kann dann zum Ermitteln eines korrigierten Stickoxidwerts mittels Zuordnen der ermittelten Kompensationsspannung dem korrigierten Stickoxidwert verwendet werden.

Ein Kompensationsstickoxidwert wird ermittelt, der zum Korrigieren des mittels des Abgassensors ermittelten Stickoxidwerts herangezogen wird.

Insbesondere kann die ermittelte Kompensationsspannung dazu dienen, die mittlere Temperatur des Sensorelements im Bereich der elektrischen Zuleitungen der Heizvorrichtung anzuzeigen, auf deren Basis wiederum die Gehäusetemperatur des Abgassensors ermittelt werden kann. Eine erhöhte mittlere Temperatur des Sensorelements im Bereich der elektrischen Zuleitungen der Heizvorrichtung und/oder eine erhöhte Gehäusetemperatur können dazu führen, dass die Messgenauigkeit des Abgassensors verfälscht ist. Insbesondere kann durch die Erhöhung der Temperatur im Bereich der Zuleitungen der Wärmeabtransport von der Spitze des Sensorelements, wo der Heizabschnitt der Heizvorrichtung im Sensorelement untergebracht ist, gestört werden. Dadurch kann sich das Temperaturprofil in der Spitze des Sensorelements ändern, was nur sehr schwer kompensierbar ist. Jedoch kann das geänderte Temperaturprofil zur Folge haben, dass die näher an der Sensorelementspitze angeordnete Pumpelektrode kühler ist als die Messelektrode. Dadurch kann der angesprochene Messfehler der erfassten Stickoxidkonzentration entstehen.

Folglich kann mit der ermittelten Kompensationsspannung die mittlere Temperatur des Sensorelements im Bereich der elektrischen Zuleitungen des Heizvorrichtung ermittelt werden, wodurch wiederum eine Kompensation der verfälschten Messwerte des Abgassensors durchgeführt werden kann.

Folglich ist gemäß einem ersten Aspekt der vorliegenden Erfindung ein Verfahren zum Ermitteln eines korrigierten Stickoxidwerts eines Abgassensors offenbart, der ein Sensorelement und eine im Sensorelement angeordnete Heizvorrichtung zum Heizen des Sensorelements aufweist. Die Heizvorrichtung umfasst einen im Sensorelement angeordneten Heizabschnitt, der über eine erste elektrische Leitung und eine zweite elektrische Leitung mit einer Steuervorrichtung zum elektrischen Ansteuern des Heizabschnitts elektrisch verbunden ist. Die Heizvorrichtung umfasst ferner eine zwischen der Steuervorrichtung und der ersten elektrischen Leitung elektrisch verbundene Messleitung, mittels der der temperaturabhängige Widerstand des Heizabschnitts steuerbar sind. Das erfindungsgemäße Verfahren umfasst ein Ermitteln einer Messspannung, die zwischen der ersten elektrischen Leitung und der Messleitung abfällt, ein Ermitteln einer Kompensationsspannung durch Ermitteln einer Differenz zwischen einer vorbestimmten Referenzspannung und der ermittelten Messspannung, ein Ermitteln eines Kompensationsstickoxidwerts mittels Zuordnen der ermittelten Kompensationsspannung dem Kompensationsstickoxidwert, ein Ermitteln eines Stickoxidwerts mittels des Abgassensors und ein Ermitteln des korrigierten Stickoxidwerts mittels Subtraktion des Kompensationsstickoxidwerts vom ermittelten Stickoxidwert. Dabei entspricht die vorbestimmte Referenzspannung einer Messspannung, die zwischen der ersten elektrischen Leitung und der Messleitung bei einer vorbestimmten Temperatur des Sensorelements abfällt.

Dabei ist es bevorzugt, dass das Zuordnen der ermittelten Kompensationsspannung dem Kompensatioinsstickoxidwert mittels einer Zuordnungstabelle und/oder einer Zuordnungsvorschrift, wie beispielsweise einer mathematischen Abbildung, erfolgt. Dabei kann es vorteilhaft sein, dass die Zuordnungstabelle bei vorbestimmten Bedingungen zuvor ermittelte empirische Werte aufweist, die der ermittelten Kompensationsspannung den entsprechenden Zustandsparameter zuordnet.

Bevorzugt handelt es sich bei der vorbestimmten Temperatur um eine Raumtemperatur von ungefähr 20°C.

Weitere Merkmale und Aufgaben der Erfindung werden dem Fachmann durch Ausüben der vorliegenden Lehre und Betrachten der beiliegenden Zeichnungen ersichtlich, in denen:
- Fig. 1: eine schematische Schnittansicht durch einen in Form eines Stickoxidsensors beispielhaft dargestellten Abgassensors für eine Brennkraftmaschine eines Fahrzeugs zeigt,
- Fig. 2: eine schematische Schnittansicht durch den Abgassensor der Fig. 1 entlang der Linie II - II zeigt, und
- Fig. 3: ein Ablaufdiagramm eines erfindungsgemäßen Verfahrens zum Ermitteln eines korrigierten Stickoxidwerts zeigt.

Im Rahmen der vorliegenden Offenbarung sind amperometrisch arbeitende Sensoren, wie beispielsweise Stickoxidsensoren, Lambdasonde und Sauerstoffsensor, dadurch gekennzeichnet, dass deren Messprinzip auf der Amperometrie basiert, d. h. auf einer elektrochemischen Methode zur quantitativen Bestimmung von chemischen Stoffen. Insbesondere wird an einer Arbeitselektrode ein elektrischer Strom derart eingestellt, dass sich ein zeitlich konstantes elektrochemisches Potential einstellt.

Ferner umfasst im Rahmen der vorliegenden Offenbarung der Begriff "Steuerung" die regelungstechnischen Begriffe "Steuern" und "Regeln". Der Fachmann wird jeweils erkennen, wann ein regelungstechnisches Steuern und wann ein regelungstechnisches Regeln anzuwenden ist.

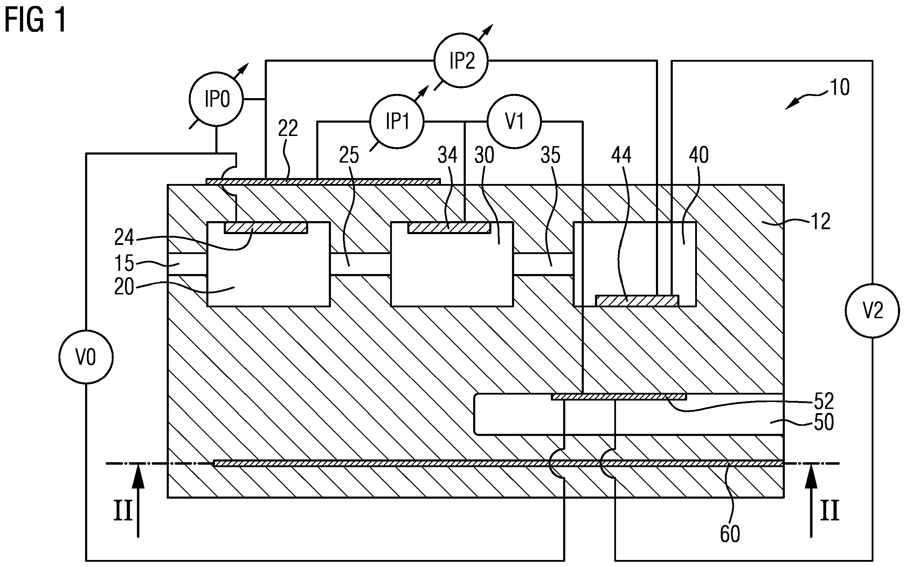

Die Fig. 1 zeigt einen beispielhaften Stickoxidsensor 10, der exemplarisch für einen Abgassensor steht. Folglich ist die vorliegende Erfindung auch dazu bedacht, bei sämtlichen Sensoren für Brennkraftmaschinen für Fahrzeuge eingesetzt zu werden, die eine Heizvorrichtung aufweisen, wie beispielsweise Lambdasonde und Sauerstoffsensor. Insbesondere ist die vorliegende Erfindung bei Abgassensoren anwendbar, die einen keramischen Grundträger mit daran angebrachtem Elektrodenpaar aufweisen.

Unter Verweis auf die Fig. 1 ist eine schematische Schnittansicht des beispielhaften Stickoxidsensor 10 dargestellt, der dazu ausgebildet ist, in einem Auslasstrakt einer Brennkraftmaschine (nicht gezeigt) angeordnet zu werden und den Stickoxidgehalt bzw. den Sauerstoffgehalt im Abgas der Brennkraftmaschine quantitativ zu erfassen.

Der Stickoxidsensor 10 weist einen Hauptkörper 12 aus einem Feststoffelektrolyten auf, der vorzugsweise aus einem Mischkristall aus Zirkonoxid und Yttriumoxid und/oder durch einen Mischkristall aus Zirkonoxid und Calciumoxid gebildet ist. Zusätzlich kann ein Mischkristall aus Hafniumoxid, ein Mischkristall aus Perowskit-basierten Oxiden oder ein Mischkristall aus trivalentem Metalloxid verwendet werden, wie beispielsweise Aluminiumoxid (Al₂O₃). Der Hauptkörper 12 bildet ein Sensorelement des Abgassensors 10. Im Folgenden wird der Hauptkörper 12 somit auch als Sensorelement 12 bezeichnet.

Innerhalb des Hauptkörpers 12 des exemplarisch dargestellten Stickoxidsensors 10 sind eine erste Pumpkavität 20, eine zweite Pumpkavität 30 und eine Messkavität 40 vorgesehen. Die erste Pumpkavität 20 ist über einen Verbindungspfad 15 mit dem Äußeren des Hauptkörpers 12 verbunden. Insbesondere kann Abgas durch den Verbindungspfad 15 in die erste Pumpkavität 20 strömen Die zweite Pumpkavität 30 ist mit der ersten Pumpkavität 20 über einen ersten Diffusionspfad 25 verbunden.

Die Messkavität 40 ist mit der zweiten Pumpkavität 30 über einen zweiten Diffusionspfad 35 verbunden.

Im Hauptkörper 12 ist außerdem eine Referenzkavität 50 gebildet, die direkt mit dem Äußeren des Hauptkörpers 12 in Verbindung steht. Innerhalb der Referenzkavität 50 ist eine Referenzelektrode 52 angeordnet. Insbesondere steht die Referenzkavität 50 mit der Umgebungsluft, d. h. nicht mit dem Abgas, in Verbindung und ist dazu ausgebildet, eine Sauerstoffreferenz für die im Stickoxidsensor 10 angeordneten verschiedenen Elektroden zu bilden.

An einer Außenseite des Hauptkörpers 12 ist eine Abgaselektrode 22 angeordnet. Insbesondere kann während eines Messbetriebs des Stickoxidsensors 10 durch Anlegen eines Referenzstroms an der Abgaselektrode 22 der im Abgas befindliche Sauerstoff ionisiert werden und durch den Hauptkörper 12 als Sauerstoffionen zur Referenzelektrode 52 diffundieren und dort wieder in Sauerstoffmoleküle zur Ausbildung einer Sauerstoffreferenz umgewandelt werden.

Innerhalb der ersten Pumpkavität 20 ist eine erste Pumpelektrode 24 angeordnet. Insbesondere kann während des Messbetriebs des Stickoxidsensors 10 durch Anlegen eines ersten Pumpstroms IP0 an der ersten Pumpelektrode 24 der im Abgas befindliche Sauerstoff innerhalb der ersten Pumpkavität 20 ionisiert werden und durch den Hauptkörper 12 als Sauerstoffionen wandern bzw. gelangen. Aufgrund der aus der ersten Pumpkavität 20 ausgebrachten Sauerstoffionen bildet sich zwischen der ersten Pumpelektrode 24 und der Referenzelektrode 52 indirekt eine erste Elektrodenspannung bzw. erste Nernstspannung V0 aus. Genauer gesagt bildet sich die erste Elektrodenspannung bzw. die erste Nernstspannung V0 direkt aus dem in der ersten Pumpkavität 20 noch vorliegenden Rest-Sauerstoff.

Innerhalb der zweiten Pumpkavität 30 ist eine zweite Pumpelektrode 34 angeordnet. Hier kann während des Messbetriebs des Stickoxidsensors 10 durch Anlegen eines zweiten Pumpstroms IP1 an der zweiten Pumpelektrode 34 der im Gasgemisch befindliche Sauerstoff innerhalb der zweiten Pumpkavität 30 ionisiert werden und durch den Hauptkörper 12 als Sauerstoffionen wandern bzw. gelangen. Aufgrund der aus der zweiten Pumpkavität 30 ausgebrachten Sauerstoffionen bildet sich zwischen der zweiten Pumpelektrode 34 und der Referenzelektrode 52 indirekt eine zweite Elektrodenspannung bzw. zweite Nernstspannung V1 aus. Genauer gesagt bildet sich die zweite Elektrodenspannung bzw. die zweite Nernstspannung V1 direkt aus dem in der zweiten Pumpkavität 30 noch vorliegenden Rest-Sauerstoff.

Innerhalb der Messkavität 40 ist eine Messelektrode 44 angeordnet, die dazu ausgebildet ist, während des Messbetriebs des Stickoxidsensors 10 bei Anlegen eines Messstroms IP2 den innerhalb der Messkavität 40 vorhandenen Sauerstoff und/oder Stickoxide zu ionisieren, so dass die Sauerstoffionen durch den Hauptkörper 12 wandern bzw. gelangen können. Aufgrund der aus der Messkavität 40 ausgebrachten bzw. herausgepumpten Sauerstoffionen bildet sich zwischen der Messelektrode 44 und der Referenzelektrode 52 eine dritte Elektrodenspannung bzw. dritte Nernstspannung V2 aus, die durch Anlegen des Messstroms IP2 an der Messelektrode 44 auf konstantem Wert gehalten wird. Genauer gesagt bildet sich die dritte Elektrodenspannung bzw. die dritte Nernstspannung V2 direkt aus dem in der Messkavität 40 noch vorliegenden Rest-Sauerstoff. Der angelegte Messstrom IP2 ist dann ein Indiz für den innerhalb des Abgases befindlichen Stickoxidgehalt.

Somit weist der in der Fig. 1 gezeigte Stickoxidsensor 10, der beispielhaft für einen auf dem amperometrisch Messprinzip basierenden Sensor steht, drei relevante Elektrodenpaare auf, nämlich ein erstes Elektrodenpaar bestehend aus der ersten Pumpelektrode 24 und der Abgaselektrode 22, ein zweites Elektrodenpaar bestehend aus der zweiten Pumpelektrode 34 und der Abgaselektrode 22 und ein drittes Elektrodenpaar bestehend aus der Messelektrode 44 und der Abgaselektrode 22.

Die an der ersten und zweiten Pumpelektrode 24, 34 anliegenden Pumpströme IP0 und IP1 sind derart eingestellt, das bevorzugt nur der Sauerstoff ionisiert wird, jedoch nicht die Stickoxide. Insbesondere ist die erste Pumpelektrode 24 dazu ausgebildet, während des Normalbetriebs des Stickoxidsensors 10 nahezu den gesamten Sauerstoff aus dem Abgas zu pumpen bzw. einen vorbestimmten Sauerstoffschlupf aus der ersten Pumpkavität 20 in die zweite Pumpkavität 30 zuzulassen. Die zweite Pumpelektrode 34 ist dazu ausgebildet, den aus der ersten Pumpkavität 20 noch nicht herausgepumpten Sauerstoff zu ionisieren und abzuleiten, so dass in der Messkavität 40 nahezu nur Stickoxide vorliegen. Die Messelektrode 44 ist dazu ausgebildet, die Stickoxide zu ionisieren, wobei der an der Messelektrode 44 angelegte Messstrom IP2 ein Maß für den Stickoxidgehalt im Abgas ist.

Innerhalb des Hauptkörpers 12 ist ferner eine Heizvorrichtung 60 angeordnet, die dazu ausgebildet ist, den Hauptkörper 12 auf eine vorbestimmte Betriebstemperatur zu heizen und auf dieser zu halten, beispielsweise bei ca. 850°C.

Die Betriebsweise zum Ermitteln des Stickoxidgehalts im Abgas der Brennkraftmaschine mittels des offenbarten Stickoxidsensors 10 ist bereits aus dem Stand der Technik bekannt, auf den an dieser Stelle verwiesen wird. Das regelungstechnische Steuerungsprinzip für den Stickoxidsensor 10 der Fig. 1 ist nämlich dadurch gekennzeichnet, dass die jeweiligen Elektrodenspannungen bzw. Nernstspannungen V0, V1, V2 durch Anlegen und Anpassen der Pumpströme IP0, IP1 und des Messstroms IP2 auf konstantem Niveau gehalten werden.

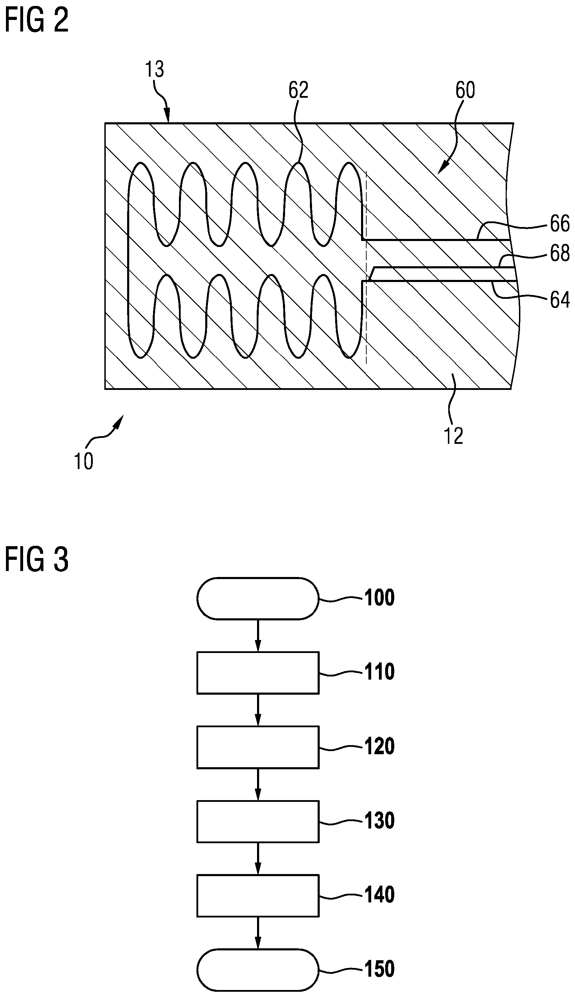

Die Fig. 2 zeigt eine Schnittansicht durch den Abgassensor 10 der Fig. 1 entlang der Linie II-II. Aus der Fig. 2 wird ersichtlich, dass die Heizvorrichtung 60 im Sensorelement 12 vollständig eingebettet und darin angeordnet ist und einen zum Heizen des Sensorelements 12 ausgebildeten Heizabschnitt 62 aufweist, der über eine erste elektrische Leitung 64 und eine zweite elektrische Leitung 66 mit einer Steuervorrichtung (nicht explizit dargestellt) zum elektrischen Ansteuern des Heizabschnitts 62 elektrisch verbunden ist. In der Fig. 2 ist der Heizabschnitt 62 von der ersten elektrischen Leitung 64 und der zweiten elektrischen Leitung 66 durch eine gestrichelte Linie getrennt dargestellt. Insbesondere handelt es sich bei dem Heizabschnitt 62 um eine Heizwendel, die dazu ausgebildet ist, das Sensorelement 12 insbesondere in unmittelbare Umgebung der ersten Pumpkavität 20, der zweiten Pumpkavität 30 und der Messkavität 40 auf die Betriebstemperatur von ungefähr 850°C zu heizen. Folglich werden damit auch die Elektroden 24, 34, 44 (siehe Fig. 1) entsprechend erwärmt.

Zusätzlich weist die Heizvorrichtung 60 eine elektrische Messleitung 68 auf, die zwischen der Steuervorrichtung und der ersten elektrischen Leitung 64 elektrisch verbunden ist. Bei der Messleitung 68 handelt es sich insbesondere um eine relativ zur ersten Leitung (ungefähr 0,4 Ohm [Ω]) und zweiten Leitung (ungefähr 0,4 Ohm [Ω]) hochohmige elektrische Leitung (ungefähr 6 Ohm [Ω]), die den Heizabschnitt 62 überbrückt und dazu ausgebildet ist, den Widerstand bzw. die Betriebstemperatur des Sensorelements 12 im Bereich des Heizabschnitts 62 zu steuern. Insbesondere kann durch eine Widerstandsmessung zwischen der ersten elektrischen Leitung 64 und der Messleitung 68 bzw. einer Widerstandsmessung zwischen der zweiten elektrischen Leitung 66 und der Messleitung 68 der elektrische Widerstand des Heizabschnitts 62 ermittelt werden, um damit die dem Heizabschnitt 62 elektrisch zugeführte Heizenergie zum Heizen des Sensorelements 12 auf die vorbestimmte Solltemperatur zu steuern. Der Heizabschnitt 62 ist insbesondere in einem Endbereich 13 des Sensorelements angeordnet.

Unter zusätzlichem Verweis auf die Fig. 3 wird im Folgenden ein beispielhaftes erfindungsgemäßes Verfahren zum Ermitteln eines korrigierten Stickoxidwerts erläutert.

Das Verfahren der Fig. 3 startet beim Schritt 100 und gelangt dann zum Schritt 110, an dem eine Messspannung ermittelt wird, die zwischen der ersten elektrischen Leitung 64 und der Messleitung 68 abfällt. In einem darauffolgenden Schritt 120 wird eine Kompensationsspannung basierend auf einer vorbestimmten Referenzspannung und der ermittelten Messspannung ermittelt. Die vorbestimmte Referenzspannung ist eine zwischen der ersten elektrischen Leitung 64 und der Messleitung 68 abfallende Messspannung, die zwischen diesen beiden Leitungen 64, 68 bei einer vorbestimmten (bekannten) Temperatur des Sensorelements 12 (wie beispielsweise bei Raumtemperatur von ungefähr 20°C) abfällt. Beim Schritt 120 wird die Kompensationsspannung durch das Bilden der Differenz zwischen der vorbestimmten Referenzspannung und der ermittelten Messspannung ermittelt.

In einem weiteren Schritt 130 wird ein Kompensationsstickoxidwert mittels Zuordnens der ermittelten Kompensationsspannung dem Kompensationsstickoxidwert ermittelt. Dies kann beispielsweise anhand einer Zuordnungstabelle erfolgen, die die ermittelte Kompensationsspannung einem entsprechenden Kompensationsstickoxidwert zuordnet. Alternativ kann das Zuordnen mittels einer mathematischen Abbildung erfolgen.

In einem weiteren Schritt 140 wird dann der vom Abgassensor 10 als Messstrom IP2 erfasste Stickoxidwert unter Berücksichtigung des ermittelten Kompensationsstickoxidwert zu einem korrigierten Stickoxidwert korrigiert.

Dabei wird der ermittelte Kompensationsstickoxidwert von dem vom Abgassensor 10 erfassten Stickoxidwert, der vom Messstrom IP2 angezeigt wird, subtrahiert.

Gemäß einem weiteren erfindungsgemäßen Verfahren wird anstelle oder zusätzlich zum Schritt 130 der Fig. 3 ein Verfahrensschritt durchgeführt, bei dem der ermittelten Kompensationsspannung ein entsprechender Sensorelementtemperaturwert für denjenigen Bereich des Sensorelements 12 zugeordnet, der die elektrischen Leitungen 64, 66, 68 umgibt. Aus dem damit ermittelten Sensorelementtemperaturwerts kann in einem weiteren Schritt die Temperatur eines Gehäuses (nicht explizit dargestellt) des Abgassensors 10 abgeschätzt werden. Die Kompensation der ermittelten Stickoxidwerte des Abgassensors 10 kann dann basierend auf der ermittelten mittleren Temperatur desjenigen Bereichs des Sensorelements 12, der die elektrischen Leitungen 64, 66, 68 umgibt, und/oder auf der ermittelten Gehäusetemperatur erfolgen.

Mit Hilfe des erfindungsgemäßen Verfahrens kann somit eine zumindest teilweise Kompensation des Stickoxidoffsets erfolgen, der sich aufgrund einer erhöhten Temperatur des Sensorelements 12 im Bereich der elektrischen Leitungen 64, 66, 68 ergeben kann. Insbesondere kann das den Abgassensor 10 umströmende Abgas zu der Temperaturerhöhung des genannten Bereichs des Sensorelements 12 führen. Das heiße Abgas kann die Temperatur das Gehäuse des Abgassensors 10 erhöhen, was wiederum über Konvektion und Konduktion zur Erwärmung des die elektrischen Leitungen 64, 66, 68 umgebenden Bereichs des Sensorelements 12 führen kann. Zudem kann das erhitzte Abgasrohr und weitere externe Wärmequellen, wie beispielsweise Turbolader und Abgaskrümmer, zu einer Temperaturerhöhung des Gehäuses des Abgassensors 10 führen, welche wiederum die Messgenauigkeit des Abgassensors (siehe oben) beeinträchtigen kann. Durch die Temperaturerhöhung des Sensorelements 12 des Abgassensors 10 kann weniger Temperatur vom vorderen Messbereich des Sensorelements 12 abgeführt werden, was zu einer Verschiebung des Temperaturprofils der Elektroden des Abgassensors 10 führen kann, verglichen mit einem normalen Betriebszustand bzw. mit dem Neu- Zustand des Abgassensors 10. Durch die Erhöhung der Temperatur der Messelektrode 44 kann der Messstrom IP2 größer werden und somit das NOx Signal größer als real sein.

## Patentansprüche

1. Verfahren zum Ermitteln eines korrigierten Stickoxidwerts eines Abgassensors (10), der ein Sensorelement (12) und eine im Sensorelement (12) angeordnete Heizvorrichtung (60) zum Heizen des Sensorelements (12) aufweist, wobei die Heizvorrichtung (60) einen im Sensorelement (12) angeordneten Heizabschnitt (62) aufweist, der über eine erste elektrische Leitung (64) und eine zweite elektrische Leitung (66) mit einer Steuervorrichtung zum elektrischen Ansteuern des Heizabschnitts (62) elektrisch verbunden ist, wobei die Heizvorrichtung (60) ferner eine zwischen der Steuervorrichtung und der ersten elektrischen Leitung (64) elektrisch verbundene Messleitung (68) aufweist, mittels der der temperaturabhängige Widerstand des Heizabschnitts (62) steuerbar ist, wobei das Verfahren aufweist:
- Ermitteln einer Messspannung, die zwischen der ersten elektrischen Leitung (64) und der Messleitung (68) abfällt,
- Ermitteln einer Kompensationsspannung durch Ermitteln einer Differenz zwischen einer vorbestimmten Referenzspannung und der ermittelten Messspannung, wobei die vorbestimmte Referenzspannung einer Messspannung entspricht, die zwischen der ersten elektrischen Leitung (64) und der Messleitung (68) bei einer vorbestimmten Temperatur des Sensorelements (12) abfällt,
- Ermitteln eines Kompensationsstickoxidwerts mittels Zuordnens der ermittelten Kompensationsspannung dem Kompensationsstickoxidwert,
- Ermitteln eines Stickoxidwerts mittels des Abgassensors (10), und
- Ermitteln des korrigierten Stickoxidwerts mittels Subtraktion des Kompensationsstickoxidwerts vom ermittelten Stickoxidwert

2. Verfahren nach Anspruch 1, wobei das Zuordnen der ermittelten Kompensationsspannung dem Kompensationsstickoxidwert mittels einer Zuordnungstabelle und/oder einer Zuordnungsvorschrift erfolgt.

3. Verfahren nach einem der hervorgehenden Ansprüche, wobei die vorbestimmte Temperatur einer Raumtemperatur von ungefähr 20°C entspricht.

## Claims

1. Method for determining a corrected nitrogen oxide value of an exhaust gas sensor (10) comprising a sensor element (12) and a heating device (60) arranged in the sensor element (12) and intended for heating the sensor element (12), wherein the heating device (60) comprises a heating section (62) arranged in the sensor element (12), said heating section being electrically connected, via a first electrical line (64) and a second electrical line (66), to a control device for electrically controlling the heating section (62), wherein the heating device (60) furthermore comprises a measuring line (68), which is electrically connected between the control device and the first electrical line (64) and by means of which the temperature-dependent resistance of the heating section (62) is controllable, wherein the method comprises:
- determining a measurement voltage dropped between the first electrical line (64) and the measuring line (68),
- determining a compensation voltage by determining a difference between a predetermined reference voltage and the determined measurement voltage, wherein the predetermined reference voltage corresponds to a measurement voltage dropped between the first electrical line (64) and the measuring line (68) at a predetermined temperature of the sensor element (12),
- determining a compensation nitrogen oxide value by means of assigning the determined compensation voltage to the compensation nitrogen oxide value,
- determining a nitrogen oxide value by means of the exhaust gas sensor (10), and
- determining the corrected nitrogen oxide value by means of subtracting the compensation nitrogen oxide value from the determined nitrogen oxide value.

2. Method according to Claim 1, wherein assigning the determined compensation voltage to the compensation nitrogen oxide value is effected by means of an assignment table and/or an assignment specification.

3. Method according to either of the preceding claims, wherein the predetermined temperature corresponds to a room temperature of approximately 20°C.

## Revendications

1. Procédé pour déterminer une valeur corrigée d'oxyde d'azote d'un capteur de gaz d'échappement (10) qui présente un élément capteur (12) et un dispositif de chauffage (60) agencé dans l'élément capteur (12) pour chauffer l'élément capteur (12), le dispositif de chauffage (60) présentant une section de chauffage (62) agencée dans l'élément capteur (12) qui est reliée par l'intermédiaire d'un premier conducteur électrique (64) et d'un deuxième conducteur électrique (66) à un dispositif de commande pour commander électriquement la section de chauffage (62), le dispositif de chauffage (60) présentant en outre un conducteur de mesure (68) relié électriquement entre le dispositif de commande et le premier conducteur électrique (64), au moyen duquel la résistance dépendant de la température de la section de chauffage (62) peut être commandée, le procédé présentant :
- la détermination d'une tension de mesure qui chute entre le premier conducteur électrique (64) et le conducteur de mesure (68),
- la détermination d'une tension de compensation par détermination d'une différence entre une tension de référence prédéterminée et la tension de mesure déterminée, la tension de référence prédéterminée correspondant à une tension de mesure qui chute entre le premier conducteur électrique (64) et le conducteur de mesure (68) à une température prédéterminée de l'élément capteur (12),
- la détermination d'une valeur de compensation d'oxyde d'azote par affectation de la tension de compensation déterminée à la valeur de compensation d'oxyde d'azote,
- la détermination d'une valeur d'oxyde d'azote au moyen du capteur de gaz d'échappement (10), et
- la détermination de la valeur corrigée d'oxyde d'azote en soustrayant la valeur de compensation d'oxyde d'azote de la valeur d'oxyde d'azote déterminée.

2. Procédé selon la revendication 1, dans lequel l'affectation de la tension de compensation déterminée à la valeur de compensation d'oxyde d'azote s'effectue au moyen d'un tableau d'affectation et/ou d'une règle d'affectation.

3. Procédé selon l'une quelconque des revendications précédentes, dans lequel la température prédéterminée correspond à une température ambiante d'environ 20 °C.
